# EUROPEAN PATENT SPECIFICATION

(11) **EP 4 509 760 B1**
(45) Date of publication and mention of the grant of the patent: **12.08.2026**
(21) Application number: 23788352.5
(22) Date of filing: 12.04.2023
(51) Int. Cl.: F23N 1/00, F23N 5/24, F23N 5/26, G01F 3/22, G05D 16/06, F23K 5/00

(54) **PRESSURE REGULATOR**
DRUCKREGLER
RÉGULATEUR DE PRESSION

(30) Priority: 12.04.2022 JP 2022065456
(43) Date of publication of application: 19.02.2025
(73) Proprietor: Panasonic Intellectual Property Management Co., Ltd., Kadoma-shi, Osaka 571-0057 (JP)
(72) Inventor: YASUDA, Kenji, Osaka 571-0057 (JP)
(74) Representative: SSM Sandmair
(86) International application number: PCT/JP2023/014829
(87) International publication number: WO 2023/199934

(56) References cited:
- EP-A1- 2 458 357
- WO-A1-2013/029175
- JP-A- 2003 503 785
- JP-A- 2008 256 391
- JP-A- H06 258 170
- JP-B2- 2 785 459
- US-A1- 2020 318 794

## Description

### Technical Field

The present invention relates to a pressure regulator which aims to improve the safety and convenience of the use of gas.

### Background Art

When gas is taken out from a high-pressure gas container and then used by gas equipment, a pressure regulator is conventionally used. For example, the pressure regulator is connected to the high-pressure gas container, and a gas meter having a safety function is connected to the pressure regulator. Then, the gas is supplied to the gas equipment. Thus, the pressure of the gas from the high-pressure gas container is reduced by the pressure regulator (see PTL 1, for example).

### Citation List

### Patent Literature

PTL 1: Japanese Laid-Open Patent Application Publication No. 4-244506
US 2020/318794 A1 discloses a valve integrated pressure regulator assembly for dispensing a gas from a compressed gas cylinder. The valve integrated pressure regulator includes a continuously adjustable, low pressure flow meter valve and a flow sensor incorporated directly into the valve body of the valve integrated pressure regulator assembly.

### Summary of Invention

### Technical Problem

However, there exists such a use form that the gas equipment is directly connected to the pressure regulator without using the gas meter having the safety function. In this case, there is a risk of explosion by gas leakage at the gas equipment. Such use form is often used especially in countries other than Japan. In many countries that use LP gas, the LP gas is purchased in units of a gas container. Therefore, it is unnecessary to measure the amount of use by the gas meter, and thus, the gas meter is not provided in many cases.

Moreover, in the above use form, users (or consumers) provide the gas equipment, connect hoses, and the like by themselves in many cases. Therefore, the users may continuously use the gas equipment without noticing gas leakage caused by construction errors, deterioration of the hoses, or the like.

The present invention was made to solve the above conventional problems, and an object of the present invention is to provide a pressure regulator having a safety function.

### Solution to Problem

To solve the above conventional problems, a pressure regulator of the present invention includes the features of claim 1.

Thus, the gas leakage detection suitable for the use of the gas equipment by the high-pressure gas container can be performed without using a gas meter having a safety function. Advantageous Effects of Invention

According to the pressure regulator of the present invention, it is possible to avoid new system construction, such as adding a gas meter having a safety function, in a use environment in which gas equipment is used by a conventional high-pressure gas container. Thus, only by replacing a conventionally used pressure regulator, the gas leakage of the gas equipment can be detected, and explosion accidents can be prevented.

### Brief Description of Drawings

FIG. 1 is a schematic sectional view of a pressure regulator according to Embodiment 1 of the present disclosure.
FIG. 2 is a schematic sectional view of the pressure regulator according to Embodiment 2 of the present invention.
FIG. 3 is a schematic sectional view of the pressure regulator according to Embodiment 3 of the present invention.
FIG. 4 is a schematic sectional view of the pressure regulator according to Embodiment 4 of the present invention.
FIG. 5 is a system diagram of the pressure regulator according to Embodiment 4 of the present invention.

### Description of Embodiments

The invention is defined by the subject-matter of claim 1. The dependent claims relate to preferred embodiments of the invention. A pressure regulator of the present disclosure is a pressure regulator that reduces pressure, which is supplied from a gas container, to pressure to be used by gas equipment, the pressure regulator including: a diaphragm that receives pressure of gas at one side thereof and receives pressure of an atmosphere at the other side thereof; a valve that reduces the pressure of the gas, which is supplied from the gas container, in accordance with a position of the diaphragm and supplies the gas to the gas equipment; a flowmeter that measures a flow rate of the gas whose pressure has been reduced by the valve; and a leakage determiner that determines presence or absence of gas leakage in the gas equipment based on the flow rate measured by the flowmeter (first disclosed configuration). Therefore, without additionally providing a gas meter having a safety function or without additionally providing another gas leakage detector, the gas leakage can be detected only by replacing a conventionally used pressure regulator.

The pressure regulator having the above configuration includes a pressure sensor that measures gage pressure of the gas whose pressure has been reduced by the valve, wherein the leakage determiner includes a pressure value, which has been measured by the pressure sensor, in a determination parameter (second disclosed configuration). Therefore, abnormality detection and gas leakage determination accuracy of the pressure regulator can be improved.

The pressure regulator having the configuration (first or second disclosed configuration) includes a shutoff valve that is located at a gas passage and stops flow of the gas, wherein when the leakage determiner determines that the gas leakage has occurred, the leakage determiner outputs a shutoff signal to the shutoff valve (third disclosed configuration). Thus, further gas leakage can be suppressed by stopping the flow of the gas.

The pressure regulator having the configuration (any one of the first to third disclosed configurations) includes a wireless communicator that transmits and receives information to and from an outside, wherein the wireless communicator forwards a determination result of the leakage determiner to the outside (fourth disclosed configuration). Thus, even when a user is not close to the pressure regulator, the user can remotely recognize a gas leakage event by a mobile terminal or the like.

The attached drawings and the following description are provided to help skilled persons fully understand the present disclosure and are not intended to limit the subject matters recited in the claims.

### Embodiment 1

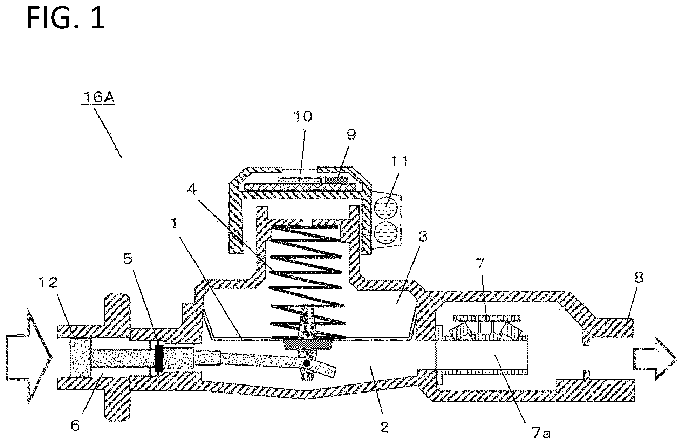

FIG. 1 is a diagram schematically showing a cross section structure of a pressure regulator 16A according to Embodiment 1 of the present disclosure.

The pressure regulator 16A shown in FIG. 1 includes a regulator main body, a diaphragm 1, an adjusting spring 4, a valve 5, a flowmeter 7, a leakage determiner 9, a display 10, a battery 11, and the like. Block arrows in the drawings indicate a gas flow direction. In the following description, the terms "upstream" and "downstream" are used based on the gas flow direction.

In FIG. 1, the entire regulator main body has a tubular shape. A downstream portion of the regulator main body is a tubular reduced-pressure outlet attaching portion 8, and an upstream portion thereof is a tubular high-pressure inlet attaching portion 12. The diaphragm 1 is located between the reduced-pressure outlet attaching portion 8 and the high-pressure inlet attaching portion 12 so as to extend along the gas flow direction. The reduced-pressure outlet attaching portion 8 is an attaching portion by which gas equipment is connected to the pressure regulator 16A. The high-pressure inlet attaching portion 12 is an attaching portion by which a gas supply source (gas container) is connected to the pressure regulator 16A.

A gas passage through which gas flows is located inside the regulator main body. A region of the gas passage along the diaphragm 1 (i.e., a region of the gas passage whose side surface is the diaphragm 1) is a reduced-pressure side 2 (reduced-pressure region 2). Moreover, when viewed from the diaphragm 1, a region outside the gas passage (i.e., a region at an upper side of the gas passage in FIG. 1) is an atmospheric-pressure side 3 (atmospheric-pressure region 3). When viewed from the reduced-pressure side 2, an upstream region of the gas passage (i.e., a region at a left side in FIG. 1) is a high-pressure side 6 (high-pressure region 6).

The valve 5 is located between the high-pressure side 6 and the reduced-pressure side 2 in the regulator main body. Therefore, the regions that are the high-pressure side 6 and the reduced-pressure side 2 in the gas passage are defined by the valve 5. Moreover, as described above, the diaphragm 1 is located between the reduced-pressure side 2 and the atmospheric-pressure side 3. Therefore, the regions that are the reduced-pressure side 2 (a part of the gas passage) and the atmospheric-pressure side 3 (an outside of the gas passage) are defined by the diaphragm 1.

The diaphragm 1 is a membrane-shaped diaphragm that separates the reduced-pressure side 2 and the atmospheric-pressure side 3 while securing airtightness. The adjusting spring 4 extends in a direction perpendicular to (or intersecting with) the gas passage (or the gas flow direction) and is located at the atmospheric-pressure side 3 that is an outside of the diaphragm 1. Therefore, the diaphragm 1 is pushed down by the adjusting spring 4 from the atmospheric-pressure side 3 toward the reduced-pressure side 2.

In the regulator main body, the flowmeter 7 is located at a position that is further downstream of the gas passage (reduced-pressure side 2) when viewed from the diaphragm 1. The flowmeter 7 measures the flow rate of the gas flowing through a tubular channel portion 7a. The flowmeter 7 is attached such that the channel portion 7a is located in the middle of the gas passage from the reduced-pressure side 2 to the reduced-pressure outlet attaching portion 8 in the regulator main body. Therefore, the gas flowing from the reduced-pressure outlet attaching portion 8 into the gas passage in the regulator main body flows through the channel portion 7a, and thus, the flow rate of the gas is measured.

A specific configuration of the flowmeter 7 is not especially limited, and various known configurations may be suitably used. A typical configuration of the flowmeter 7 is, for example, an ultrasonic measurement system or a thermal measurement system.

An opening degree of the valve 5 is adjusted in accordance with the position of the diaphragm 1 such that the pressure of the gas is reduced. Specifically, for example, the diaphragm 1 and the valve 5 are connected to each other by a coupler, and the position of the valve 5 is changed toward the upstream side or the downstream side in accordance with the position of the diaphragm 1 that has been pushed down. Thus, the opening degree of the valve 5 is adjusted. Therefore, the valve 5 can adjust an inflow amount of gas flowing from the high-pressure side 6 to the reduced-pressure side 2 in the gas passage and stop the flow of the gas. Thus, the valve 5 can be regarded as a "gas inflow amount adjusting valve." The configuration of the valve 5 is not limited to this and may be a known configuration as long as the opening degree of the valve 5 can be adjusted in accordance with the position of the diaphragm 1 that has been pushed down.

As shown in FIG. 1, at the atmospheric-pressure side 3 constituting the regulator main body, one end of the adjusting spring 4 is in contact with the diaphragm 1, and the other end of the adjusting spring 4 is fixed by the regulator main body. Therefore, the diaphragm 1 is biased by the adjusting spring 4 toward the gas passage (i.e., toward the inside). In the present embodiment, the leakage determiner 9, the display 10, and the battery 11 are located outside the other end of the adjusting spring 4.

Based on measurement data of the gas flow rate measured by the flowmeter 7, the leakage determiner 9 determines the presence or absence of gas leakage. Specifically, for example, the leakage determiner 9 determines whether the value of the gas flow rate measured by the flowmeter 7 is the flow rate of the gas consumed by the gas equipment (not shown) connected to a portion ahead of the reduced-pressure outlet attaching portion 8 or the flow rate of the gas that is leaking. A specific configuration of the leakage determiner 9 is not especially limited, and the leakage determiner 9 may be configured by known hardware and software.

The display 10 displays, for example, a result of the determination by the leakage determiner 9. A specific configuration of the display 10 is not especially limited, and examples of the display 10 may include a liquid crystal panel and a light emitting element. Moreover, the display 10 may include an alarm that emits an alarm sound. Thus, especially, not only a visual notification but also an auditory notification is realized. Therefore, the consumer can be informed of the gas leakage at an earlier stage, and thus, a further accident prevention effect can be obtained.

The battery 11 supplies electric power to the flowmeter 7, the leakage determiner 9, and the display 10. A specific configuration of the battery 11 is not especially limited, and a known configuration can be suitably used.

Operations of the pressure regulator 16A according to Embodiment 1 configured as above will be described below.

First, the gas supply source (gas container) of the gas that has been compressed at high pressure is connected to the high-pressure inlet attaching portion 12 through a pipe. Moreover, various pieces of gas equipment are connected to the reduced-pressure outlet attaching portion 8 through pipes. Then, when a main gas supply tap is opened, the gas flows through the valve 5 into the reduced-pressure side 2. When the gas is not consumed by the gas equipment, gas pressure at the reduced-pressure side 2 increases, and the diaphragm 1 is pushed up. When the diaphragm 1 is pushed up, the valve 5 coupled to the diaphragm 1 operates in a closing direction to stop the flow of the gas into the reduced-pressure side 2.

When the gas equipment starts consuming the gas, the gas pressure at the reduced-pressure side 2 decreases, and the diaphragm 1 is pushed down. When the diaphragm 1 is pushed down, the valve 5 coupled to the diaphragm 1 operates in an opening direction, and the amount of gas flowing into the reduced-pressure side 2 increases. When the consumption of the gas stops again, the diaphragm 1 is pushed up, and the valve 5 closes. Thus, the pressure at the reduced-pressure side 2 does not increase any more.

As above, the inflow amount of gas is adjusted by the valve 5 in accordance with the change in the pressure at the reduced-pressure side 2. Thus, the pressure at the reduced-pressure side 2 can be kept substantially constant. The flowmeter 7 mounted inside the regulator main body measures, every several seconds, the flow rate of the gas flowing out from the reduced-pressure outlet attaching portion 8, converts an instant flow rate of the gas flowing instantaneously into a numerical value, and transmits (outputs) its data to the leakage determiner 9 in real time.

The leakage determiner 9 determines whether the instant flow rate transmitted from the flowmeter 7 is the flow rate of the gas that is normally consumed by the gas equipment or the flow rate of the gas that is abnormally consumed due to the gas leakage. For example, the flow rate of the gas that is normally consumed by the gas equipment is several thousand L/h as a total of all the pieces of gas equipment connected. In this case, when the flowmeter 7 measures the instant flow rate of 10,000 L/h or more, the leakage determiner 9 determines that the gas consumption is not normal, and determines that the gas leakage has occurred.

Moreover, when there is no gas consumption by the gas equipment, the instant flow rate of the flowmeter 7 is zero L/h. However, when there is minute gas leakage, for example, the instant flow rate of several L/h may be measured. Therefore, the leakage determiner 9 monitors whether or not the instant flow rate becomes zero L/h in a certain period of time, and when the instant flow rate does not become zero L/h, the leakage determiner 9 determines that the gas leakage has occurred. To visually inform the consumer of the result of the determination by the leakage determiner 9, the display 10 displays whether the state is a normal state or a state where the gas leakage has occurred.

As described above, in the pressure regulator 16A according to the present embodiment, the flowmeter 7 measures the instant flow rate of the gas of a portion after the reduced-pressure outlet attaching portion 8, and the leakage determiner 9 determines whether the gas consumption is normal, or the abnormal gas leakage has occurred. Then, the consumer is visually informed of the result of the determination. Thus, for example, when excessive gas leakage has occurred since a gas pipe has come off at the gas equipment, or when minute gas leakage has occurred since the gas pipe has been damaged, the consumer can be informed of such event at an early stage. As a result, serious explosion accidents and fire can be prevented.

### Embodiment 2

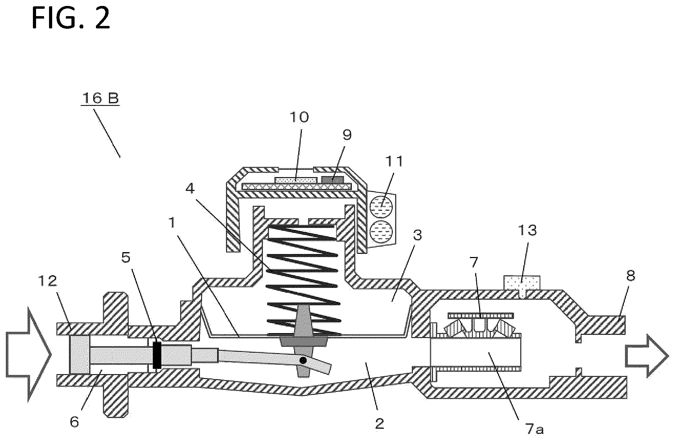

FIG. 2 is a diagram schematically showing a cross section structure of a pressure regulator 16B according to Embodiment 2 of the present invention. In FIG. 2, regarding the same members as the pressure regulator 16A described in Embodiment 1 and components having the same functions as the pressure regulator 16A described in Embodiment 1, the same reference signs are used, and detailed explanations are omitted. Therefore, in the present embodiment, different matters from the configuration described in Embodiment 1 will be mainly described.

The pressure regulator 16B according to the present embodiment is different in configuration from the pressure regulator 16A according to Embodiment 1 in that a pressure sensor 13 is included.

In the present embodiment, the pressure sensor 13 is attached to the regulator main body so as to measure gage pressure (difference between absolute pressure of the gas and atmospheric pressure) of the gas pressure at the reduced-pressure side 2 of the pressure regulator 16B.

In the example shown in FIG. 2, the pressure sensor 13 is attached to a position in the vicinity of the flowmeter 7, i.e., a position (in FIG. 2, a side wall at an upper side) of a side wall located upstream of the reduced-pressure outlet attaching portion 8. A specific configuration of the pressure sensor 13 in the present embodiment is not especially limited. As shown in FIG. 2, the pressure sensor 13 may expose an opposite side of a measurement point to an atmosphere and measure the gage pressure based on the atmospheric pressure, or may separately measure the atmospheric-pressure side 3, the reduced-pressure side 2, and the absolute pressure and calculate the gage pressure of the reduced-pressure side 2 based on differences thereamong.

Operations of the pressure regulator 16B according to Embodiment 2 configured as above will be described below.

Basic operations of the pressure regulator 16B are the same as those of the pressure regulator 16A according to Embodiment 1 described above. Herein, the pressure sensor 13 periodically measures the pressure of the reduced-pressure side 2, converts the pressure into a numerical value, and transmits (outputs) the numerical value to the leakage determiner 9.

Based on the pressure value transmitted (output) from the pressure sensor 13 and the instant flow rate transmitted (output) from the flowmeter 7, the leakage determiner 9 determines whether the gas flow rate and the pressure change are the gas flow rate and the pressure change when the gas equipment normally consumes the gas or the abnormal gas flow rate and the abnormal pressure change due to the gas leakage. For example, when the instant flow rate is within a range of a normal gas consumption flow rate, but the pressure change is more than expected, the leakage determiner 9 determines that the gas consumption is not normal.

Moreover, when there is no gas consumption by the gas equipment, the pressure value of the reduced-pressure side 2 stabilizes within a certain pressure range. However, when there is an abnormality in the valve 5 or the diaphragm 1, the pressure value obtained from the pressure sensor 13 becomes a pressure value that is not expected. In this case, the leakage determiner 9 determines that the state is abnormal.

As described above, in the pressure regulator 16B according to the present embodiment, the pressure sensor 13 measures the pressure value of the reduced-pressure side 2, and the leakage determiner 9 determines based on the pressure value and the instant flow rate whether the state is normal or abnormal, and visually informs the consumer of the result of the determination. Therefore, not only when the gas leakage has occurred but also when, for example, an abnormality has occurred in the pressure regulator 16B, the consumer can be informed of such event at an early stage. As a result, serious explosion accidents and fire can be prevented.

### Embodiment 3

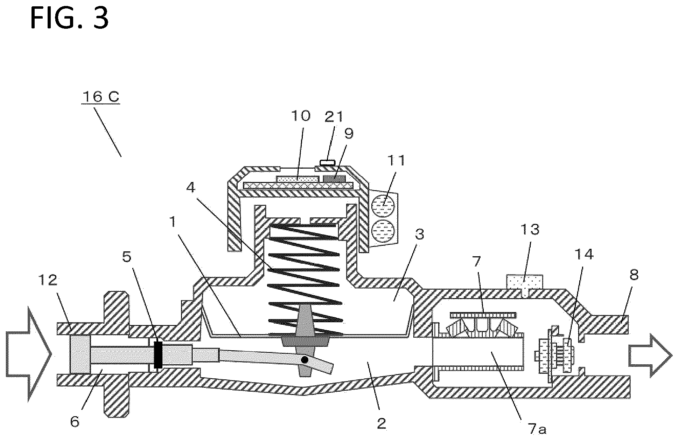

FIG. 3 is a diagram schematically showing a cross section structure of a pressure regulator 16C according to Embodiment 3 of the present invention. In FIG. 3, regarding the same members as the pressure regulator 16A described in Embodiment 1 or the pressure regulator 16B described in Embodiment 2 and components having the same functions as the pressure regulator 16A described in Embodiment 1 or the pressure regulator 16B described in Embodiment 2, the same reference signs are used, and detailed explanations are omitted. Therefore, in the present embodiment, different matters from the configuration described in Embodiment 1 or 2 will be mainly described.

A basic configuration of the pressure regulator 16C according to the present embodiment is the same as that of the pressure regulator 16B according to Embodiment 2. The pressure regulator 16C is different from the pressure regulator 16B in that a shutoff valve 14 is included.

In the present embodiment, the shutoff valve 14 is attached to a position downstream of the flowmeter 7 and the pressure sensor 13 at the reduced-pressure side 2 of the regulator main body, i.e., a position immediately upstream of the reduced-pressure outlet attaching portion 8. The shutoff valve 14 closes to completely stop the outflow of the gas from the reduced-pressure outlet attaching portion 8.

Moreover, in the example shown in FIG. 3, an open-close operating portion 21 by which the shutoff valve 14 is manually opened or closed is located in the vicinity of the display 10. A specific configuration of the open-close operating portion 21 is not especially limited, and the open-close operating portion 21 may be configured by known hardware and software. For example, the open-close operating portion 21 may include: a control circuit that can output to the shutoff valve 14 a control signal for opening or closing the shutoff valve 14; and a known switch by which a command for an opening or closing operation is input to the control circuit.

Operations of the pressure regulator 16C according to Embodiment 3 configured as above will be described below.

Basic operations of the pressure regulator 16C are the same as those of the pressure regulator 16A according to Embodiment 1 described above.

In the present embodiment, for example, when the gas equipment is normally used, the leakage determiner 9 determines that the state is a state (normal state) where an abnormality is not especially occurring. Therefore, the shutoff valve 14 is kept in an open state, and thus, the gas having flowed into the high-pressure side 6 flows out through the reduced-pressure outlet attaching portion 8.

When the leakage determiner 9 determines that the abnormality has occurred, the leakage determiner 9 outputs a shutoff signal by which the shutoff valve 14 is closed. Examples of the abnormality in this case include the above gas leakage and an abnormality of the pressure regulator 16C itself. The shutoff valve 14 which has received the shutoff signal from the leakage determiner 9 becomes a closed state. Thus, the outflow of the gas through the reduced-pressure outlet attaching portion 8 stops.

Moreover, the leakage determiner 9 may intentionally close the shutoff valve 14 and monitor the pressure change of the reduced-pressure side 2 from the pressure value immediately after this closing. When the state is a state (normal state) where an abnormality is not especially occurring, the pressure value of the reduced-pressure side 2 stabilizes within a certain pressure range. On the other hand, when the pressure value changes more than expected at the reduced-pressure side 2, the leakage determiner 9 determines that the state is abnormal, and for example, the display 10 can inform the consumer of such state.

Moreover, by locating and operating the open-close operating portion 21, a closing instruction for intentionally closing the shutoff valve 14 can be output from the leakage determiner 9. As above, one example of a case where the shutoff valve 14 is closed by the open-close operating portion 21 is a case where the supply of the gas is simply stopped when replacing the gas equipment connected to the reduced-pressure outlet attaching portion 8 or when performing the maintenance of pipes.

As described above, in the pressure regulator 16C according to the present embodiment, the shutoff valve 14 stops the outflow of the gas through the reduced-pressure outlet attaching portion 8. Thus, the gas supply can be instantaneously stopped at the time of the gas leakage, the abnormality of the pressure regulator 16C, or the like. Therefore, the gas supply can be stopped before the consumer notices the notification. As a result, serious explosion accidents, fire, and the like can be prevented. Moreover, in the present embodiment, since the supply of the gas can be intentionally stopped, the convenience of use of the gas equipment can also be improved.

### Embodiment 4

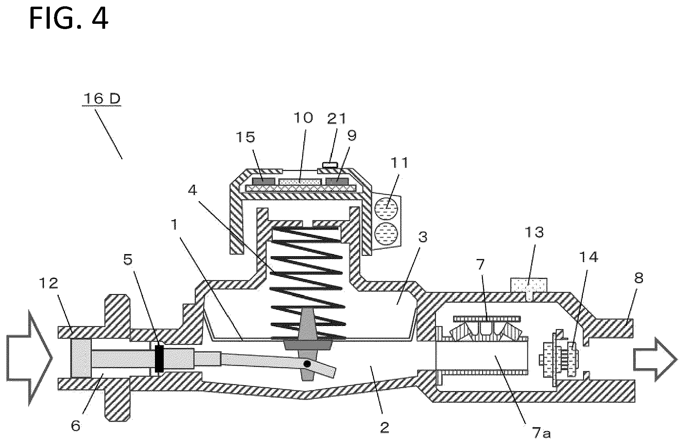

FIG. 4 is a diagram schematically showing a cross section structure of a pressure regulator 16D according to Embodiment 4 of the present invention. In FIG. 4, regarding the same members as the pressure regulator 16A described in Embodiment 1, the pressure regulator 16B described in Embodiment 2, or the pressure regulator 16C described in Embodiment 3, and components having the same functions as the pressure regulator 16A described in Embodiment 1, the pressure regulator 16B described in Embodiment 2, or the pressure regulator 16C described in Embodiment 3, the same reference signs are used, and detailed explanations are omitted. Therefore, in the present embodiment, different matters from the configuration described in Embodiment 1, 2, or 3 will be mainly described.

A basic configuration of the pressure regulator 16D according to the present embodiment is the same as that of the pressure regulator 16C according to Embodiment 3. The pressure regulator 16D is different from the pressure regulator 16C in that a wireless communicator 15 is included.

The wireless communicator 15 realizes bidirectional wireless communication between the pressure regulator 16D and external communication equipment. A specific configuration of the wireless communicator 15 is not especially limited, and a known communication apparatus can be suitably used. Information communicated by the wireless communicator 15 is not especially limited and may be, for example, a control state of the pressure regulator 16D, such as a determination result of the leakage determiner 9 or an open-close state of the shutoff valve 14.

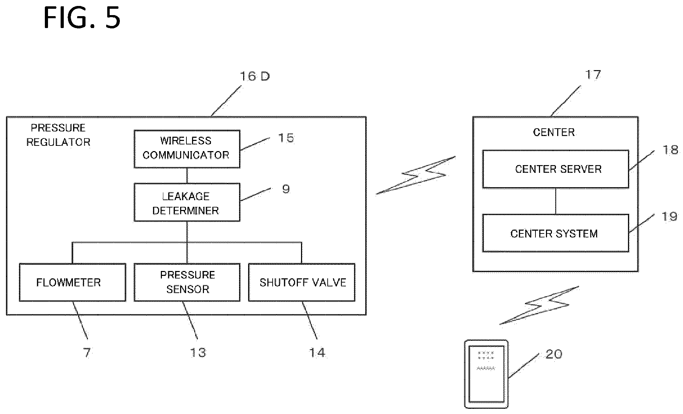

FIG. 5 is a block diagram showing one typical example of a communication system including the pressure regulator 16D according to Embodiment 4 of the present disclosure and external communication equipment (or information terminals having a communication function). In the example shown in FIG. 5, a center 17 and a smartphone 20 are shown as the external communication equipment.

Moreover, in FIG. 5, the pressure regulator 16D is shown as a functional configuration including the flowmeter 7, the pressure sensor 13, the shutoff valve 14, the leakage determiner 9, and the wireless communicator 15. The leakage determiner 9 is connected to the flowmeter 7, the pressure sensor 13, and the shutoff valve 14. As described above, the leakage determiner 9 can determine the presence or absence of the abnormality based on the output from the flowmeter 7 and/or the output from the pressure sensor 13 and control opening and closing of the shutoff valve 14.

The leakage determiner 9 is also connected to the wireless communicator 15, can communicate with the center 17, and can also communicate with the smartphone 20 through the center 17. The specific communication equipment is not especially limited, and the external communication equipment may be known communication equipment other than the center 17 and the smartphone 20. Examples of such known communication equipment include a personal computer having a communication function, a home display terminal, and a remote home electric appliance control system.

The center 17 includes a center server 18 and a center system 19. The center server 18 stores information transmitted from the wireless communicator 15 or information transmitted from the smartphone 20 of the consumer. The center system 19 processes the information stored in the center server 18. A specific configuration of the center 17 is not especially limited, and for example, a known server system can be suitably used.

Operations of the pressure regulator 16D according to Embodiment 4 configured as above will be described below.

Basic operations of the pressure regulator 16D are the same as those of the pressure regulator 16A according to Embodiment 1 described above.

In the present embodiment, first, a determination state of the leakage determiner 9 is transmitted to the center 17 by the wireless communicator 15. In the center 17, the determination state is stored in the center server 18. Information to be transmitted to the smartphone 20 is processed by the center system 19 based on the information stored in the center server 18. The center 17 transmits the processed determination state to the smartphone 20. Thus, the smartphone 20 displays the determination state of the leakage determiner 9, and therefore, the consumer can confirm the determination state of the pressure regulator 16D.

Next, when the consumer wants to control the pressure regulator 16D or confirm the determination state, the consumer operates the smartphone 20 to transmit control information to the center 17. One example of the control of the pressure regulator 16D by the consumer is control when the consumer wants to intentionally close the shutoff valve 14.

The control information transmitted to the center 17 is stored in the center server 18. Based on the stored control information, the center system 19 performs processing with respect to the information to be transmitted to the pressure regulator 16D. The center 17 transmits the processed determination information to the wireless communicator 15 of the pressure regulator 16D. Thus, a control instruction is transmitted through the wireless communicator 15 to the leakage determiner 9.

For example, as described above, when the consumer wants to intentionally close the shutoff valve 14, the control instruction from the smartphone 20 is input through the wireless communicator 15 to the leakage determiner 9. The leakage determiner 9 closes the shutoff valve 14 based on the control instruction.

The communication system shown in FIG. 5 may be configured such that the wireless communicator 15 and the smartphone 20 (or another communication equipment) are directly and wirelessly connected to each other and therefore can bidirectionally communicate with each other without through the center 17. Thus, the notification regarding the state of the pressure regulator 16D can be directly confirmed by the smartphone 20 or the like, and the pressure regulator 16D can be directly controlled by the smartphone 20 or the like.

As described above, in the pressure regulator 16D according to the present embodiment, the wireless communicator 15 can transmit the state of the pressure regulator 16D to the external communication equipment (terminal, etc.) and receive the control instruction from the external communication equipment. Thus, even when the consumer is away from the pressure regulator 16D at the time of the gas leakage, the abnormality of the pressure regulator 16D, or the like, the consumer can notice the notification of the communication equipment, such as the smartphone 20, carried by the consumer. As a result, serious explosion accidents and fire can be prevented.

As with the pressure regulator 16C according to Embodiment 3, the pressure regulator 16D according to Embodiment 4 can intentionally stop the gas supply. Therefore, the convenience of use of the gas equipment can also be improved.

### Industrial Applicability

As above, the pressure regulator according to the present disclosure can improve the safety of use of gas equipment without locating a gas meter having a safety function or introducing additional equipment. Therefore, the pressure regulator according to the present disclosure is also applicable to regions, such as emerging countries, where energy infrastructure is under development.

### Reference Signs List

- 1: diaphragm
- 2: reduced-pressure side
- 3: atmospheric-pressure side
- 4: adjusting spring
- 5: valve
- 6: high-pressure side
- 7: flowmeter
- 8: reduced-pressure outlet attaching portion
- 9: leakage determiner
- 10: display
- 11: battery
- 12: high-pressure inlet attaching portion
- 13: pressure sensor
- 14: shutoff valve
- 15: wireless communicator
- 16A to 16D: pressure regulator
- 17: center
- 18: center server
- 19: center system
- 20: smartphone

## Claims

1. A pressure regulator (16) that is configured to reduce pressure, which is supplied from a gas container, to pressure to be used by gas equipment,
the pressure regulator (16) comprising:
a diaphragm (1) is configured to receive pressure of gas at one side thereof and receives pressure of an atmosphere at the other side thereof;
a valve (5) is configured to reduce the pressure of the gas, which is supplied from the gas container, in accordance with a position of the diaphragm (1) and supplies the gas to the gas equipment;
a flowmeter (7) that is configured to measure a flow rate of the gas whose pressure has been reduced by the valve (5); and
a leakage determiner (9) that is configured to determine presence or absence of gas leakage in the gas equipment based on the flow rate measured by the flowmeter (7),
**characterized in that**
the pressure regulator (16) comprises
a pressure sensor (13) that is configured to measure gage pressure of the gas whose pressure has been reduced by the valve (5), wherein
the leakage determiner (9) includes a pressure value, which has been measured by the pressure sensor (13), in a determination parameter.

2. The pressure regulator (16) according to claim 1, comprising a shutoff valve (14) that is located at a gas passage and is configured to stop flow of the gas, wherein
when the leakage determiner (9) is configured to determine that the gas leakage has occurred, the leakage determiner (9) outputs a shutoff signal to the shutoff valve (14).

3. The pressure regulator (16) according to any one of claims 1 or 2, comprising a wireless communicator (15) that is configured to transmit and receive information to and from an outside, wherein
the wireless communicator (15) is configured to forward a determination result of the leakage determiner (9) to the outside.

## Patentansprüche

1. Druckregler (16), der so konfiguriert ist, dass er den von einem Gasbehälter gelieferten Druck auf den von Gasgeräten benötigten Druck reduziert,
wobei der Druckregler (16) umfasst:
eine Membran (1), die so konfiguriert ist, dass sie den Druck von Gas auf der einen Seite und den Druck einer Atmosphäre auf der anderen Seite aufnimmt;
ein Ventil (5), das so konfiguriert ist, dass es den Druck des aus dem Gasbehälter zugeführten Gases entsprechend der Stellung der Membran (1) reduziert und das Gas dem Gasgerät zuführt;
einen Durchflussmesser (7), der so konfiguriert ist, dass er den Durchfluss des Gases misst, dessen Druck durch das Ventil (5) reduziert wurde; und
einen Leckagedetektor (9), der so konfiguriert ist, dass er anhand der vom Durchflussmesser (7) gemessenen Durchflussrate das Vorhandensein oder Fehlen von Gasleckagen in der Gasanlage ermittelt,
**dadurch gekennzeichnet, dass**
der Druckregler (16) umfasst:
einen Drucksensor (13), der so konfiguriert ist, dass er den Überdruck des Gases misst, dessen Druck durch das Ventil (5) reduziert wurde, wobei
der Leckagedetektor (9) einen vom Drucksensor (13) gemessenen Druckwert als Bestimmungsparameter enthält.

2. Druckregler (16) nach Anspruch 1, das ein Absperrventil (14) umfasst, das an einem Gasdurchgang angeordnet und zum Unterbrechen des Gasflusses konfiguriert ist, wobei
wenn der Leckagedetektor (9) so konfiguriert ist, dass er feststellt, dass ein Gasleck aufgetreten ist, der Leckagedetektor (9) ein Abschaltsignal an das Absperrventil (14) ausgibt.

3. Druckregler (16) nach einem der Ansprüche 1 oder 2, der einen drahtlosen Kommunikator (15) umfasst, der so konfiguriert ist, dass er Informationen nach außerhalb senden und von dort empfangen kann, wobei
der drahtlose Kommunikator (15) so konfiguriert ist, dass er das Ergebnis des Leckagedetektors (9) nach außerhalb weiterleitet.

## Revendications

1. Régulateur de pression (16) qui est configuré pour réduire la pression, qui est fournie en provenance d'un récipient à gaz, à une pression devant être utilisée par un équipement à gaz,
le régulateur de pression (16) comprenant :
un diaphragme (1) qui est configuré pour recevoir une pression de gaz sur un côté de celui-ci, et reçoit une pression d'une atmosphère sur l'autre côté de celui-ci ;
une soupape (5) qui est configurée pour réduire la pression du gaz, qui est fournie en provenance du récipient à gaz, conformément à une position du diaphragme (1), et fournit le gaz à l'équipement à gaz ;
un débitmètre (7) qui est configuré pour mesurer un débit du gaz dont la pression a été réduite par la soupape (5) ; et
une unité de détermination de fuite (9) qui est configurée pour déterminer la présence ou l'absence de fuite de gaz dans l'équipement à gaz sur la base du débit mesuré par le débitmètre (7),
**caractérisé en ce que**
le régulateur de pression (16) comprend
un capteur de pression (13) qui est configuré pour mesurer une pression effective du gaz dont la pression a été réduite par la soupape (5), dans lequel
l'unité de détermination de fuite (9) inclut une valeur de pression, qui a été mesurée par le capteur de pression (13), dans un paramètre de détermination.

2. Régulateur de pression (16) selon la revendication 1, comprenant une soupape d'arrêt (14) qui est située au niveau d'un passage de gaz et est configurée pour arrêter un écoulement du gaz, dans lequel
lorsque l'unité de détermination de fuite (9) est configurée pour déterminer que la fuite de gaz s'est produite, l'unité de détermination de fuite (9) envoie en sortie un signal d'arrêt à la soupape d'arrêt (14).

3. Régulateur de pression (16) selon l'une quelconque des revendications précédentes 1 ou 2, comprenant une unité de communication sans fil (15) qui est configurée pour transmettre et recevoir des informations à un extérieur, et en provenance de celui-ci, dans lequel
l'unité de communication sans fil (15) est configurée pour renvoyer à l'extérieur un résultat de détermination de l'unité de détermination de fuite (9).
